(19) Europäisches Patentamt / European Patent Office / Office européen des brevets

(11) **EP 2 406 904 B1**

(12) **EUROPEAN PATENT SPECIFICATION**

(45) Date of publication and mention
of the grant of the patent:
**11.09.2013 Bulletin 2013/37**

(21) Application number: **09847474.5**

(22) Date of filing: **23.07.2009**

(51) Int Cl.:
*H04J 11/00* (2006.01)      *H04L 27/26* (2006.01)
*H04L 25/03* (2006.01)

(86) International application number:
**PCT/CN2009/072893**

(87) International publication number:
**WO 2011/009239 (27.01.2011 Gazette 2011/04)**

(54) **Spectral shaping of multicarrier signals**

Spektrale formung von Mehrträgersignalen

Mise en forme spectrale de signaux multiporteurs

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**18.01.2012 Bulletin 2012/03**

(60) Divisional application:
**13176960.6**

(73) Proprietor: **Huawei Technologies Co., Ltd.**
**Guangdong 518129 (CN)**

(72) Inventor: **VAN DE BEEK, Jaap**
**Longgang District**
**Shenzhen 518129 (CN)**

(74) Representative: **Kreuz, Georg Maria et al**
**Huawei Technologies**
**Dessauerstrasse 3**
**80992 Munich (DE)**

(56) References cited:
**EP-A1- 0 837 565     CN-A- 1 371 553**
**CN-A- 1 913 511**

• COSOVIC I ET AL: "Subcarrier Weighting: A Method for Sidelobe Suppression in OFDM Systems", IEEE COMMUNICATIONS LETTERS, IEEE SERVICE CENTER, PISCATAWAY, NJ, US, vol. 10, no. 6, 1 June 2006 (2006-06-01), pages 444-446, XP001546968, ISSN: 1089-7798, DOI: 10.1109/LCOMM.2006.1638610
• JAAP VAN DE BEEK ET AL: "N-continuous OFDM", IEEE COMMUNICATIONS LETTERS, IEEE SERVICE CENTER, PISCATAWAY, NJ, US, vol. 13, no. 1, 1 January 2009 (2009-01-01), pages 1-3, XP011241494, ISSN: 1089-7798, DOI: 10.1109/LCOMM.2009.081446
• PAGADARAI S ET AL: "A Novel Sidelobe Suppression Technique for OFDM-Based Cognitive Radio Transmission", NEW FRONTIERS IN DYNAMIC SPECTRUM ACCESS NETWORKS, 2008. DYSPAN 2008. 3RD IEEE SYMPOSIUM ON, IEEE, PISCATAWAY, NJ, USA, 14 October 2008 (2008-10-14), pages 1-7, XP031353249, ISBN: 978-1-4244-2016-2
• VAN DE BEEK J: "Sculpting the multicarrier spectrum: a novel projection precoder", IEEE COMMUNICATIONS LETTERS, IEEE SERVICE CENTER, PISCATAWAY, NJ, US, vol. 10, no. 12, 1 December 2009 (2009-12-01), pages 881-883, XP011286167, ISSN: 1089-7798

EP 2 406 904 B1

**Description**

**FIELD OF INVENTION**

The present invention relates to a method for generating a multicarrier signal representing data symbols, where the multicarrier signal is a linear combination of subcarriers, as defined in the preamble of claim 1.

The present invention also relates to a method for transmission of a multicarrier signal representing data symbols, where the multicarrier signal is a linear combination of subcarriers, as defined in the preamble of claim 14.

The present invention also relates to a transmission entity arranged for transmitting a multicarrier signal representing data symbols, where the multicarrier signal is a linear combination of subcarriers, as defined in the preamble of claim 19.

The present invention also relates to a computer program and a computer program product implementing the methods of the invention.

**BACKGROUND OF THE INVENTION**

Multicarrier transmission systems, such as systems utilizing Orthogonal Frequency Division Multiplexing (OFDM), Discrete Fourier Transform (DFT) spread OFDM, or the like, have been selected in many communication systems, e.g. in 3rd Generation Partnership Project Evolved UMTS Terrestrial Radio Access (3GPP E-UTRA), and Digital Subscriber Line (DSL) systems, such as Asymmetric Digital Subscriber Line (ADSL) systems.

Also, the multicarrier technology is used for ordinary broadcasting systems, such as Digital Audio Broadcasting (DAB) and Digital Video Broadcasting (DVB) systems. Thus, multicarrier transmission is used for both wireless and wireline systems carrying data by means of a signal composed of a large number of subcarriers. These systems can facilitate high spectral efficiency, since many multicarrier technologies, such as OFDM are suitable for, for example, combination with Multiple Input Multiple Output processing (MIMO- processing) and/or opportunistic transmission schemes.

However, the spectral efficiency of the systems, for both wireless and wireline systems, also depends on the level of the out- of- band power emission, i.e. the power level of the multicarrier signal being emitted outside a designated transmission bandwidth. If the out- of- band power is efficiently suppressed, adjacent frequency channels can be spaced densely, and thereby spectrum utilization is improved in the system. Also, the out- of- band emissions must be kept below certain levels in order not to cause significant interference in adjacent frequency bands.

For these reasons, in many system standards, the out- of- band power emissions are regulated and restricted. Several types of requirements exist to regulate the out- of- band power emissions of a signal. In E- UTRA for example, spectral masks, adjacent- channel- leakage- ratios and occupied bandwidth requirements have been defined.

For example, an OFDM signal (being a multiplex of a large number of finite-length complex-valued exponential waveforms) has a power spectrum determined by a number of squared-sinc-shaped functions. A classical text-book OFDM's spectrum decays slowly by being inversely proportional with the distance from the carrier frequency. This typically causes interference to adjacent frequency bands due to the finite-duration of the exponentials. Therefore, OFDM signals will typically not meet requirements on out-of-band emission in a standard, because of the slow decay of the the spectrum sidelobes. This slow decay causes the OFDM power spectrum to become relatively broad, resulting in problematic out-of-band emissions, which have to be reduced in some way.

Related to these interference characteristics, OFDM-based wireless standards typically specify a number of measures to which the emitted signal must obey. For example, spectral masks are defined in such standards in order to be used for regulating the out-of-band emission and for limiting the interference on adjacent frequency bands.

In order to meet the spectral demands of the mask, a transmitted signal is here typically different from the one specified in the standard. In order to limit the error, a second measure is therefore often used, which is denoted the Error-Vector Magnitude (EVM). In this way it is guaranteed that interference characteristics transmitted signals from different manufacturers are approximately the same, while at the same time manufacturers are given freedom to diverge from the emitted signal's specification for implementation purposes. This freedom may be wanted by the manufacturer in order, for instance, to meet a desired spectral mask, or to achieve a signal having a low Peak to Average Power ratio (PAPR).

Further, in recently emerging cognitive systems, a radio network may be designed to adapt its spectral characteristics to the actual circumstances in the radio environment. For example, the system may scan a certain predefined frequency band for white space, i.e. spectral regions that are not in use at a certain time. The system may then autonomously decide to designate this white space for its own use and start using this white space for the transmission of data. Typically, this white space may be fragmented in nature, in the sense that white space is non- contiguous spectrum.

Here, the designated bandwidth is defined as a radio frequency region or a number of regions of radio frequencies, which are relevant for the transmission of data in the radio system of interest. Specifically, a situation where several non- contiguous frequency regions constitute this designated bandwidth may arise. Such non- continuous regions may sometimes give the impression of spectral holes in an otherwise contiguous frequency region. Here, the amount of power emission occurring in- band, but in frequency regions that do not belong to the designated bandwidth has to be limited. Here, and in this document, in- band suppression is defined as suppression of frequencies being spectrally located within the multicarrier channel, e.g. within the OFDM channel.

The region or regions are sometimes assigned by regulatory bodies, and sometimes autonomously allocated by the radio system of interest itself. The region or regions are typically associated with requirements on the amount of emitted power that may leak out of this/these region(s). Also, the scanning for white space is a dynamic activity by the network, which may result in a designated spectrum, which changes over time. Here, the power emission outside the designated bandwidth has to be adapted to the changing spectrum.

There are two classes of prior art that deal with the above interference problems. One of these classes can be labelled classical prior art, being presented in the seventies/eighties, which deal with the above issues by utilising filtering and pulse shaping.

These classical prior art solutions have a number of problems. One problem is that they consume cyclic prefix of the OFDM system, since the cyclic prefix is used for shaping the spectrum. This has the effect that the residual length of the cyclic prefix by the use of these solutions is smaller than without the use of these spectral shaping procedures. Thus, these prior art solutions reduce the system's robustness to multipath. Also, the low pass filtering used in the classical prior art can not solve the problem of in-band power emission, because of the basic function of the low pass filter.

Also, in the classical prior art solutions, simply nulling some of the OFDM subcarriers has been proposed to be combined with the pulse shaping for in- band emission suppression. However, this approach often does not cause fast enough spectral decay. Therefore, the spectral shaping performance is bad.

One other class of prior art can be labeled as recent prior art. These prior art solutions are in general effective to solve the problem of consumption of cyclic prefix, but still suffer from a number of problems.

In these prior art solutions, aiming to solve both the out-of-band and the in-band suppression problem, cancellation carriers are modulated such that the spectrum gets a desired shape. One problem with these methods is that the performance of the spectral suppression is often not good enough to meet requirements set by the standards. Also, the PAPR of the transmitted signal often exceeds acceptable values, and the cancellation carriers consume a high transmit power to shape the spectrum.

In recent prior art solutions utilizing precoded OFDM methods, each data symbol is weighted prior to modulation by the cyclic prefix. This method has no good performance, since the spectral suppression is typically less than 10dB. Furthermore, the weights are the result of a nonlinear programming problem, for which a solution is performed by a numerical algorithm. Thus, this results in increased transmitter complexity. Also, if a receiver receiving such a signal employs a classical OFDM receiver this prior art solution results in a performance loss in terms of reduced detection error probability.

According to another prior art OFDM precoder, the suppression problem is solved in the time-domain. However, this prior art solution has a problem in that it does not explicitly solve the in-band spectral requirement problems, which leads to poor performance. Also, this solution fails to provide a flexible way to achieve a steep spectral decay.

Thus, the prior art solutions suffer from a number of problems being related to providing an emitted multicarrier radio signal which satisfies both in- band and out- of- band suppression requirements of standardized spectral emission masks.

Ivan Cosovic et al disclosed a method for sidelobe suppression in OFDM systems in IEEE communication letters XP001546968, vol. 10, no. 6, 1 June 2006, pages 444- 446. The method proposed in the letter is based on the multiplication of the used subcarriers with subcarrier weights.

Jaap van de Beek et al disclosed an N- continuous OFDM system in IEEE communication letters xP011241494, vol. 13, no. 1, 1 January 2009, pages 1- 3. In the letter the author disclosed an OFDM signaling format characterized by a precoder that renders the emitted signal's phase and amplitude continuous.

## SUMMARY OF THE INVENTION

It is an object of the present invention to provide a spectral shaping that solves the above stated problem.

The present invention aims to provide a more efficient spectral shaping than the spectral shaping known in the background art, which also has a low implementation complexity.

The object is achieved by the above mentioned method for generating a multicarrier signal according to claim 1, i.e. a method comprising modulation of base signals with said data symbols, wherein each one of said base signals is a weighted sum of said subcarriers, wherein each one of said subcarriers is weighted by an element of a weighting vector, wherein the multiplication of a constraint matrix and the weighting vector results in an all-zero vector, wherein said constraint matrix represents constraints limiting a magnitude of said multicarrier signal's Fourier transform at frequencies outside a designated bandwidth.

The object is also achieved by the above mentioned transmission entity according to claim 16, i.e. a transmission entity comprising

modulation means arranged for modulating base signals with said data symbols, wherein each one of said base signals is a weighted sum of said subcarriers, wherein each one of said subcarriers is arranged to be weighted by an element of a weighting vector,
wherein the multiplication of a constraint matrix and the weighting vector results in an all-zero vector,
wherein said constraint matrix is arranged to represent constraints for limiting a magnitude of said multicarrier signal's Fourier transform at frequencies outside a designated bandwidth.

The object is also achieved by the above mentioned computer program and computer program product implementing the methods of the invention.

The methods for generating and transmitting the multicarrier signal, and the transmission entity according to the present invention are characterized in that the multicarrier signal is generated in the signal space being spanned by the $K$ subcarriers by base signals, where each such base signal resides in the linear signal subspace being intelligently chosen. The linear signal subspace is chosen such that all multicarrier signals residing in this linear signal subspace causes the spectrum to have a desired spectral shape. Since the spectral shape of the multicarrier signal hereby can be chosen suitably, a multicarrier signal having very advantageous in-band and out-of-band emission properties is achieved.

According to an embodiment of the invention, the modulation of base signals is performed by modulating the subcarriers with precoded symbols resulting of a linear precoding of said data symbols.

According to an embodiment of the invention, that linear precoding represents a projection of a data symbol vector including said data symbols on a linear vector subspace.

Such a linear precoding has a number of advantages. The precoding results in a small EVM, and does not harm the PAPR. Also, this solution can be implemented in a very low complexity manner, saving both computation and battery resources in the transmitting entity. Also, such a linear precoding can adaptively follow the changing spectral conditions of cognitive systems, which change over time.

Thus, the invention is very well suited for coping with the time- changing spectral nature of cognitive systems, in which the frequency region or frequency regions of the designated bandwidth change over time. The adaption to this can, according to the present invention, be made very efficiently and at a low complexity, such that limited power outside the designated bandwidth is minimized.

According to an embodiment of the invention, the linear precoding represents a generation of a linear combination of base vectors residing in the nullspace of the constraint matrix, whereby each one of the base vectors is multiplied by a coefficient being one of the data symbols.

This embodiment has an advantage that low out-of-band and in-band emission is achieved, because the linear vector subspace is chosen such that all its elements have this property. Also, this embodiment results in a small error-rate loss at the receiver, at the same time as no PAPR is maintained.

According to an embodiment of the invention, the constraints represented in the constraint matrix represent the property that the multicarrier signal's Fourier transform should be zero at one or more frequencies outside said designated bandwidth. There is a freedom of choice for selecting these frequencies. However, these frequencies should preferably be properly and carefully chosen since the choice has an impact on the performance of the invention. Thus, properly chosen frequencies result in very good emission suppression, which assures that the favourable spectral properties of the multicarrier signal are achieved.

According to an embodiment of the invention, the base signals are calculated on-the-fly in the transmission entity, which is possible by the low complexity of the method of the invention.

According to another embodiment of the invention, the base signals are pre-calculated and stored in e.g. a memory means in the transmission entity, which reduces the computational needs for the transmission entity further.
Detailed exemplary embodiments and advantages of the spectral shaping according to the invention will now be described with reference to the appended drawings illustrating some preferred embodiments.

## BRIEF DESCRIPTION OF THE DRAWINGS

Fig. 1 shows a multicarrier modulation structure.
Fig. 2 shows a flow chart diagram according to an embodiment of the invention.
Fig. 3 shows a multicarrier modulation structure.
Fig. 4 shows an illustration of a projection according to an embodiment of the invention.

## DESCRIPTION OF THE PREFERRED EMBODIMENTS

In the following, the invention, which is applicable on essentially any multicarrier system, will sometimes be explained by using an OFDM system as illustration. However, the invention is not limited for use in this specific system, but can be implemented in essentially any multicarrier system as is clear to a person skilled in the art.

The multicarrier signal $z(t)$ to be generated and transmitted is of the baseband equivalent form:

$$z(t) = \sum_i s_i(t - iT) \qquad \text{(eq. 1)}$$

Here, 1/T is the symbol rate, being a rate at which data symbols are transmitted. The symbol interval T is typically the length of a time interval during which a data symbol vector is transmitted. Thus, a new multicarrier symbol is transmitted every T seconds.

Furthermore, in a reference multicarrier system, i.e. a system not employing any of the means of the invention, $s_i(t)$ is:

$$s_i(t) = \sum_{k=1}^{K} d_{k,i} p_k(t) , \qquad \text{(eq. 2)}$$

where $d_{k,i}$ are data symbols and $p_k(t)$ are subcarriers. Data symbols are here complex- valued scalars taken from a finite length constellation, for example M- Phase Shift Keying (M- PSK) , M- Quadrature Amplitude Modulation (M- QAM) , or the like. A subcarrier is defined as a base function in equation 2. These can be, for example, windowed exponentials, signature sequences, DFT- precoded exponentials (DFT- S- OFDM) , or the like. They can also be finite length exponentials for OFDM, for which the traditional form of the multicarrier pulse shape in OFDM systems is:

$$p_k(t) = e^{j2\pi \frac{k}{T_s} t} I_T(t) , \qquad \text{(eq. 3)}$$

where $I_T(t)$, which is an indicator function, is defined as $I_T(t) \overset{def}{=} 1$ for $-T_g \leq t \leq T_s$ and zero elsewhere, while the cardinal sine is defined as $\sin c(x) \overset{def}{=} \sin(x)/x$.

It is understood in the following that the description relates to the transmission of one multicarrier symbol at a time. In the following description, we will therefore omit the subscript i indicating the symbol time interval in the equations, and refer to the multicarrier symbol $s_i(t)$ of equation 2 as the multicarrier signal $s(t)$.

Thus, a reference system not utilizing any of the means of the invention would typically modulate K data symbols $d_k$, being collected in a size- Kxl vector $\mathbf{d} = [d_1, d_2, d_3, \ldots d_k]^T$, onto the K subcarriers in multicarrier signal $s(t)$ in eq. 2.

The $K$ subcarriers are orthogonal and thereby define a signal space of dimension $K$ by spanning this signal space with these orthogonal subcarriers. Here, and in this document, it should be understood that dimension means complex dimension. Thus, the signal space has $K$ complex dimensions.

Any signal $x(t)$ in this K-dimensional signal space uniquely corresponds to a general vector $\mathbf{x}$ residing in the K-dimensional vector space, where the general vector $\mathbf{x}$ is the general vector of K coefficients $x_k$ in the unique form of the multicarrier signal:

$$x(t) = \sum_{k=1}^{K} x_k p_k(t) . \qquad \text{(eq. 4)}$$

Thus, the notation signal $x(t)$ and its corresponding general vector $\mathbf{x}$ can be used interchangeably, since they refer to the same signal. Therefore, in this document, such signals $x(t)$ and their corresponding general vectors **x** will be used interchangeably.

According to the invention, base signals are modulated with the data symbols to be transmitted. Each one of these base signals is designed as a weighted sum of said subcarriers, i.e. each of these subcarriers is weighted by an element of a weighting vector. Here, the weighting vector resides in a nullspace of a constraint matrix, which represents constraints on the spectral shape of the multicarrier signal $s(t)$. More specifically, the constraints limit a magnitude of a Fourier transform of the multicarrier signal at frequencies outside the designated bandwidth.

Thus, according to the invention, a multicarrier signal, being a linear combination of $K$ subcarriers and representing $J$ data symbols, is restricted to reside in a nullspace of the constraint matrix, i.e. in a linear signal subspace of the signal space of dimension $K$ being spanned by the $K$ subcarriers. This restriction of the multicarrier signal is achieved by modulating the $J$ base signals with the $J$ data symbols.

Thus, the linear signal subspace has a dimension $K'$, where $K' \leq K$, since it is a linear signal subspace of the signal space of dimension $K$ being spanned by the $K$ subcarriers.

In other words, according to the invention, the multicarrier signal $s(t)$, representing J data symbols included in a data symbol vector **d**, is generated in the signal space being spanned by the $K$ subcarriers by using a set of base signals, each residing in the linear signal subspace of dimension $K'$.

Also, according to the invention, this linear signal subspace, i.e. the nullspace of the constraint matrix, is determined such that all multicarrier signals residing in this subspace are given a certain spectrum shape, which solves the aforementioned in- band and out- of- band emission problems. This will be explained in the following.

According to an embodiment of the invention, the constraints that define the linear signal subspace are expressed on the form:

$$\mathbf{A}\mathbf{x} = \mathbf{0} . \qquad\qquad (\text{eq. 5})$$

That is, all multicarrier signals that have coefficients in their respective unique form as described in equation 4 and satisfy equation 5 reside in the linear signal subspace. Also, the linear signal subspace defined in equation 5 corresponds to the null-space of a constraint matrix **A**.

The multicarrier signal being generated in accordance with the invention has the form:

$$s_i(t) = \sum_{j=1}^{J} d_j \varphi_j(t) \qquad\qquad (\text{eq. 6})$$

where the $\varphi_j(t)$ are base signals residing in the linear signal subspace, that is, each base signal can be written as a linear combination of the subcarriers on the form:

$$\varphi_j(t) = \sum_{k=1}^{K} g_{k,j} p_k(t) , \qquad\qquad (\text{eq. 7})$$

where the weighting vector $\mathbf{g}_j$, including the elements of the weighting vector $g_{k,j}$, must satisfy $\mathbf{A}\mathbf{g}_j = \mathbf{0}$. That is, this weighting vector must reside in the nullspace of the constraint matrix **A**, i.e. in the linear signal subspace.

Since each of the constituting base functions $\varphi_j(t)$ resides in a linear signal subspace, the generated multicarrier signal $s(t)$, being a linear combination of these base functions also resides in this linear signal subspace.

Furthermore, according to the invention, the constraint matrix **A** of size MxK, and hence the corresponding linear signal subspace, is defined by constraints limiting a magnitude of a Fourier transform for the multicarrier signal $s(t)$ at frequencies outside a designated bandwidth. Here, the linear signal subspace has a dimension $K' = K- M$, where $M$ is the number of frequencies for which the magnitude of the Fourier transform of the multicarrier signal is limited. Thus, the dimension $K'$ of the linear signal subspace is smaller than the dimension $K$ of the signal space being spanned by the $K$ subcarriers. Typically, M <<K and hence the dimension of the linear signal subspace is slightly smaller than the dimension $K$ of the signal space spanned by the $K$ subcarriers.

By this definition of the linear signal subspace, the generated multicarrier signal $s(t)$ has a low emitted signal power outside the designated bandwidth, since the constraints on the linear signal subspace, in which the multicarrier signal $s(t)$ resides, forces the multicarrier signal $s(t)$ to have a low magnitude for its Fourier transform for certain frequencies.

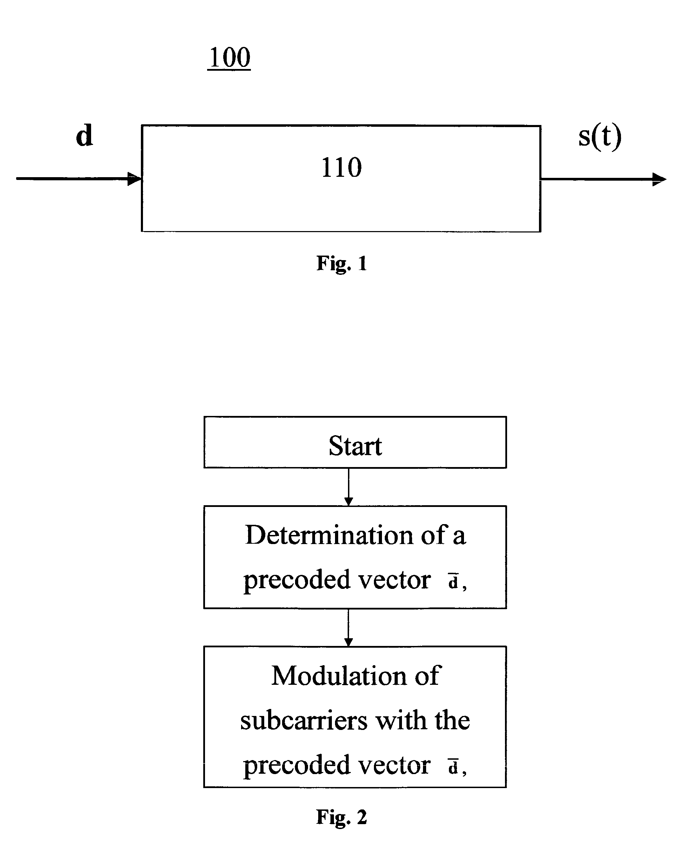

Further the multicarrier signal $s(t)$ can be generated by modulating base functions in one modulation step. This is illustrated in figure 1, which shows the structure of an arrangement for generation of a multicarrier signal $s(t)$ 100 according to the invention. Here, the multicarrier signal $s(t)$ represents a data symbol vector **d** being generated by a modulator using base signals of the linear signal subspace, such that the generated multicarrier signal resides in the linear signal subspace. As is clear for a skilled person, this structure 100 for generating the multicarrier signal $s(t)$ can be used for all embodiments of the invention.

According to an embodiment of the invention, the multicarrier signal $s(t)$ is generated by performing the modulation in two steps, as is illustrated in figure 2. In a first step, after starting the procedure, a precoded vector of precoded symbols $\bar{\mathbf{d}} = [\bar{d}_1, \bar{d}_2, \bar{d}_3, ... \bar{d}_k]^T$ is determined from the data symbols **d**. Then, in a second step, the $K$ subcarriers are modulated with these precoded symbols of the precoded vector $\bar{\mathbf{d}}$.

In a first step, the precoded vector $\bar{\mathbf{d}}$ is a derived by performing a linear precoding of the data symbols of the data symbol vector **d**:

$$\bar{\mathbf{d}} = \mathbf{G}\mathbf{d} , \qquad \text{(eq. 8)}$$

where **G** is a precoding matrix. This linear precoding is designed such that the precoded symbols of the precoded vector $\bar{\mathbf{d}}$ represents the data symbols of the data symbol vector **d**. Also, the precoded vector $\bar{\mathbf{d}}$ resides in the nullspace of constraint matrix **A**, that is $\mathbf{A}\bar{\mathbf{d}} = \mathbf{0}$. Here, the precoded vector $\bar{\mathbf{d}}$ of size Kx1 is determined such that the magnitude of a Fourier transform for the multicarrier signal $s(t)$ at frequencies outside a designated bandwidth is limited.

In a second step, a constituting multicarrier signal $s(t)$ is a multiplex of modulated subcarriers $p_k(t)$ :

$$s(t) = \sum_{k=1}^{K} \bar{d}_k p_k(t) . \qquad \text{(eq. 9)}$$

Thus, the multicarrier signal $s(t)$ is generated by modulating $K$ subcarriers with precoded symbols of the precoded vector $\bar{\mathbf{d}}$.

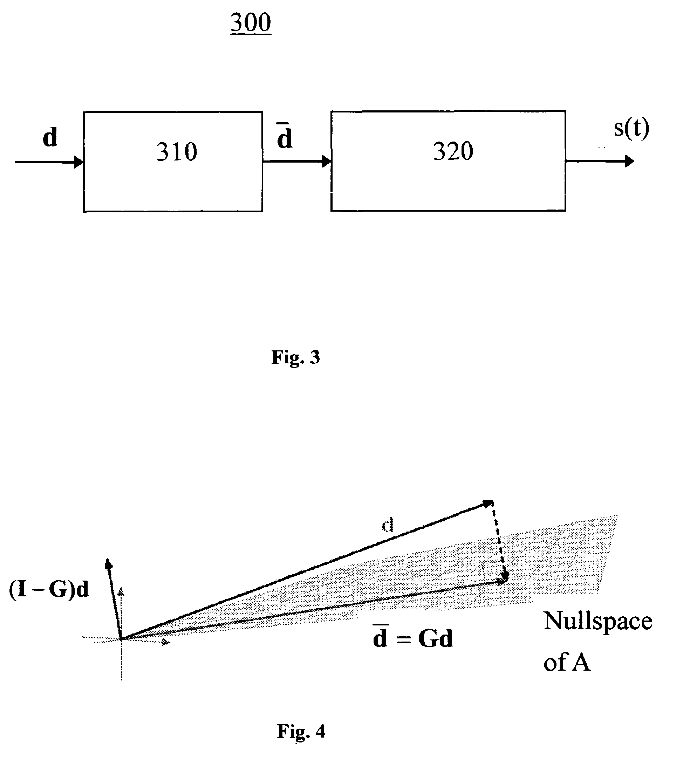

An implementation of this embodiment is illustrated in figure 3, which shows the structure of an arrangement 300 for generation of a multicarrier signal $s(t)$ according to the invention. The precoder **G** 310 turns, for each multicarrier symbol constituted of K subcarriers, the data symbol vector **d** having data symbols as elements into a precoded vector $\bar{\mathbf{d}}$ of size Kx1. After the linear precoding of the precoder 310, the precoded vector $\bar{\mathbf{d}}$ is modulated onto $K$ subcarriers in a multicarrier modulator 320, whereby a multicarrier signal $s(t)$ is generated, which has a low signal power outside the designated bandwidth.

Further, according to an embodiment of the invention, the linear precoding represents a projection of the data symbol vector **d** including the data symbols. Thus, the data symbol vector **d** is here projected on the nullspace of constraint matrix **A**, yielding the precoded vector $\bar{\mathbf{d}}$ . Such a projection is illustrated in figure 4. Here, the data symbol vector **d** comprises J data symbols, where a typical choice of J for this embodiment is equal to the number of subcarriers $K$.

According to an embodiment of the invention, the projection of the linear precoding is an orthogonal projection.

According to an embodiment of the invention, the linear precoding is expressed by a precoding matrix **G** on the form:

$$\mathbf{G} = \mathbf{I} - \mathbf{A}^H \left( \mathbf{A}\mathbf{A}^H \right)^{-1} \mathbf{A} , \qquad \text{(eq. 10)}$$

where

- **I** is an identity matrix, and
- $(\cdot)^H$ denotes Hermitian transpose.

Thus, the precoding is here defined as:
$$\bar{\mathbf{d}} = \mathbf{G}\mathbf{d}, \quad \text{where} \quad \mathbf{G} = \mathbf{I} - \mathbf{A}^H \left( \mathbf{A}\mathbf{A}^H \right)^{-1} \mathbf{A}. \quad \text{(eq. 11)}$$

The precoding matrix **G** is here a square KxK matrix and can also be interpreted as the addition of a correction vector **w** to **d** in order to obtain:

$$\bar{\mathbf{d}}: \quad \bar{\mathbf{d}} = \mathbf{d} + \mathbf{w}, \text{ where} \quad \mathbf{w} = -\mathbf{A}^H \left( \mathbf{A}\mathbf{A}^H \right)^{-1} \mathbf{A}. \quad \text{(eq. 12)}$$

According to an embodiment of the invention, the linear precoding chooses the precoded vector $\bar{\mathbf{d}}$ as such that a distance between the precoded vector $\bar{\mathbf{d}}$ and the data symbol vector **d** is minimized.

According to an embodiment of the invention, this minimized distance is a Euclidean distance, i.e. the solution to:

$$\min_{\bar{\mathbf{d}}} \left\| \mathbf{d} - \bar{\mathbf{d}} \right\|_2 \text{ subject to} \quad \mathbf{A} \bar{\mathbf{d}} = \mathbf{0} \quad \text{(eq.13)}$$

This solution defines the projection of data symbol vector **d** onto the linear vector subspace corresponding to all multicarrier symbols satisfying the requirement that their spectrum is limited at a set of predefined frequencies f0, f1, ..., fM-1 , which is embodied in the equation **A d = 0**, defining the null-space of constraint matrix **A**.

The use of such a linear precoding has a number of advantages. The precoder results in a small EVM, and thus the error-rate loss at the receiver, being related to the EVM at the transmitter, is small. Also, this linear precoding causes no PAPR deterioration.

Further, this linear precoding offers a low transmitter complexity, only necessitating order- M multiplications per subcarrier, where M is the number of frequency notches. The recalculation of the precoder G, which is done seldom, requires the inversion of an MxM matrix $\mathbf{A}\mathbf{A}^H$. This only has to be done when the spectral requirements change.

Also, the linear precoding can adaptively follow the changing conditions for the transmission and efficiently limit the amount of power emission occurring both in out- of- band and in- band for the designated bandwidth, which changes over time. This was not possible e.g. in the prior art solutions utilising filtering and windowing.

Also, if the precoder is known at the receiver, the error- rate at the transmitter can be improved with maintained data rate. The more subcarriers the system has, the better the above performance measures all are. Therefore, in future multicarrier systems, following Moore's law and thus having more and more subcarriers, the method will become more and more relevant and beneficial.

Further, according to an other embodiment of the invention, the linear precoding represents a generation of a linear combination of base vectors each residing in the nullspace of constraint matrix **A** with data symbols of the data symbol vector **d**. Here, the base vectors reside in the nullspace of the constraint matrix **A**.

This is accomplished by the use of a set of base vectors of the linear vector subspace, $\mathbf{g}_j$, j=1, 2, ..., J.

These J base vectors are used for precoding J data symbols collected in the data symbol vector $\mathbf{d} = [d_1, d_2, d_3, ...d_J]^T$:

$$\bar{\mathbf{d}} = d_1\mathbf{g}_1 + d_2\mathbf{g}_2 + d_3\mathbf{g}_3 + ... + d_J\mathbf{g}_J = \mathbf{G}\mathbf{d}, \quad \text{(eq.14)}$$

where the $\mathbf{g}_j$ are orthogonal column vectors of size Kx1 spanning the linear vector subspace, such that $\mathbf{A}\mathbf{g}_j = \mathbf{0}$, and the precoding matrix **G** is the matrix having these vectors as its columns. Here, the precoding represents a modulation of the data symbols, as will be explained later.

According to an embodiment of the invention, the base vectors residing in the linear vector subspace and being included in the linear combination are orthogonal vectors, i.e. orthogonal base vectors. The number of such orthogonal base vectors is at most $K' = K - M$, corresponding to the dimension of the linear vector subspace.

According to an embodiment of the invention, these orthogonal base vectors are obtained from a singular-value decomposition (SVD) of the constraint matrix **A**.

The SVD of an m-by-n matrix **A** is obtained by a unique factorization of **A** as:

$$A = U \Sigma V^H \qquad \text{(eq. 15)}$$

where **U** is an m-by-m unitary matrix, the matrix $\Sigma$ is m-by-n diagonal matrix with non-negative real numbers on the diagonal, and $V^H$ denotes the conjugate transpose of **V**, an n-by-n unitary matrix. The columns in **V** corresponding to the zero-valued diagonal elements of $\Sigma$ then form an orthogonal base vectors of the nullspace of **A**.

In other words, as opposed to projecting J data symbols onto a *K'* dimensional subspace, as in the above described embodiment of the invention, J data symbols collected directly in the data symbol vector **d** in the linear vector subspace are here modulated.

This modulation can be interpreted as linearly precoding the data symbols of the data symbol vector **d** by using a precoding matrix **G** of size *KxJ*, whose columns are the set of orthogonal base vectors being a basis of the linear vector subspace. The resulting precoded vector $\overline{\mathbf{d}}$ = **Gd** then represents a modulation of the data symbols included in the data symbol vector **d** along *J* orthogonal base vectors spanning the linear vector subspace.

A typical choice of J in this embodiment is equal to the dimension *K'* of the subspace. Thus, the data symbol vector **d** is, according to this embodiment, slightly shorter than in a system not utilizing precoding or in a system according to the above described embodiment of the invention, which utilizes projection, since the data symbol vector **d** here comprises *J* = *K'* elements instead *of J* = *K* elements.

Thus, this embodiment of the invention uses the desired linear signal subspace to transmit the data symbols, which corresponds to the linear signal subspace being used in the embodiment utilizing projection, but this embodiment utilizes the linear signal subspace in a different way.

For the above described embodiment of the invention providing a projection of **d** onto the linear signal subspace, the advantages of good spectral suppression are balanced with a slight increase of receiver error-rate while the bitrate is unaffected, when being compared to a system without precoding.

For the embodiment utilizing the orthogonal basis vectors of the linear vector subspace this is reverted. The price is here paid by a slight reduction in system bitrate, while the error rate of the system is unaffected, when being compared to a system without precoding.

Here, the use of the linear vector subspace guarantees that this embodiment, as for the projection embodiment, exhibit the same desirable property, i.e. low out- of- band and in- band emission, since the linear vector subspace is chosen such that all its elements have this property. Also, the error rate performace is maintained.

Specifically, this embodiment of the invention also results in a small error- rate loss at the receiver, as well as no PAPR deterioration.

According to an embodiment of the invention, the MxK constraint matrix **A** reflects the condition that the spectrum of the emitted signal must have zeros at the predefined frequencies $f_0$, $f_1$, ..., $f_{M-1}$. These frequencies should preferably be carefully chosen such that a wanted spectral shape of the multicarrier signal is achieved.

For the traditional multicarrier pulse shape in equation 3, the constraint matrix **A** has as its entry on row m and column k:

$$a_{k,m} = e^{j\pi(1-\frac{T_g}{T_s})(k-f_m T_s)} \operatorname{sinc}\left( \pi(1+\frac{T_g}{T_s})(k-f_m T_s) \right) \qquad \text{. (eq. 16)}$$

For other pulse shapes the entries in **A** will be different, as is understood by a skilled person.

According to an embodiment of the invention, the multicarrier signal is used for transmission in a cognitive radio system. Thus, the invention is applied on such a cognitive radio system having out-of-band and/or in-band emission characteristics which change over time.

According to an embodiment of the invention, the elements of the constraint matrix change over time. Thus, the transmission conditions change over time due to the characteristics of the cognitive system.

In a cognitive radio system, i.e. a system which adapts its spectral containment to the changing radio environment, the abovementioned interference problems not only apply to the out- of- band frequencies but also to certain in-band frequencies. For instance, if a certain portion of the signal's spectrum cannot be used for a certain time, the in-band power emission has to be limited. Interference caused to other surrounding systems, both in- band and/or out- of-band, must be kept as low as possible and artificial suppression is needed since the multicarrier spectrum by itself does not decay fast enough.

The method of the invention is especially well suited for such cognitive radio system and its changing environments, since it offers a low-complexity solution, not involving complex on-the-fly computations of various filters and their filter coefficients, that had to be performed in the prior art solutions.

Thus, the spectral shaping of the invention can easily adapt to the changing spectral requirements, and improves over rigid prior art solutions in terms of flexibility and adaptive power. Also, the complexity of a transmitter utilizing the invention is considerably lower for coping with changing conditions of cognitive radio systems than the complexity of prior art solutions.

The invention also relates to a method for transmission of the multicarrier signal having been generated according to the method of the invention.

According to an embodiment of the invention, the constraint matrix is made available to a receiver of the multicarrier signal by higher layer network signaling.

According to an embodiment of the invention, information identifying the constraint matrix is signaled to a receiver of the multicarrier signal. Typically, this is signaled to the receiving entity by the transmitting entity. But it can also be transmitted to the receiving entity by e.g. a relay entity in the system.

When the entity receiving the multicarrier signal has knowledge of the constraint matrix, the receiving entity then also has the information needed for being able to correctly receive the multicarrier signal. As is clear to a skilled person, the higher layer and lower level signaling can perform this in a large number of ways.

The method of the invention can be implemented by computer program, having code means, which when run in a computer causes the computer to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

The invention also relates to a transmission being entity arranged for transmitting the generated multicarrier signal. The transmission entity includes modulation means being arranged for modulating base signals with the data symbols in accordance with the method of the invention. Thus, each one of the subcarriers is arranged to be weighted by an element of a weighting vector residing in a nullspace of the constraint matrix.

Further, the transmission entity of the invention can be adapted to include means for performing any of the steps of the method of the invention. Also, the different steps of the method of the invention described above can be combined or performed in any suitable order. A condition for this of course, is that the requirements of a step, to be used in conjunction with another step of the method of the invention, must be fulfilled.

The method for generating and transmitting a multicarrier signal and the transmission entity according to the invention may be modified by those skilled in the art, as compared to the exemplary embodiments described above.

A skilled person realizes that there are real life limitations on how exact these calculation can be performed, where these limitations are related e.g. to signal processor error ranges and the like, but also to deliberate design choices as reduced number of iterations, finite-size stepsizes and the like. These limitation may result in that the multicarrier signal $s(t)$ actually being transmitted may contain values being very close to, but not exactly zero at the set of predefined frequencies $f_0$, $f_1$, ..., $f_{M-1}$. Correspondingly, that a precoded vector $\underline{d}$ may reside very close to the null-space of $\mathbf{A}$. However, the calculations are of course performed aiming to achieve these exact values, and will most of the time also result in the exact result.

As is obvious for a skilled person, a number of other implementations, modifications, variations and/or additions can be made to the above described exemplary embodiments. It is to be understood that the invention includes all such other implementations, modifications, variations and/or additions which fall within the scope of the claims.

## Claims

1. Method for generating (100, 300) a multicarrier signal representing data symbols, said multicarrier signal being a linear combination of subcarriers, said method comprising modulation of base signals with said data symbols, wherein each one of said base signals is a weighted sum of said subcarriers, said method being **characterized in that** each one of said subcarriers is weighted by an element of a weighting vector,
   wherein the multiplication of a constraint matrix and the weighting vector results in an all-zero vector,
   wherein said constraint matrix represents constraints limiting a magnitude of said multicarrier signal's Fourier transform at frequencies outside a designated bandwidth.

2. Method as claimed in claim 1, wherein said modulation of base signals is performed by modulation of said subcarriers with precoded symbols, wherein said precoded symbols are a result of a linear precoding (310) of said data symbols.

3. Method as claimed in claim 2, wherein said linear precoding (310) represents a projection of a data symbol vector including said data symbols, wherein the multiplication of the constraint matrix and the data symbol vector results in an all-zero vector.

4. Method as claimed in claim 3, wherein said projection is an orthogonal projection.

5. Method as claimed in claim 2, wherein said linear precoding (310) is expressed by a precoding matrix **G** on the form:

$$\mathbf{G} = \mathbf{I} - \mathbf{A}^{\mathbf{H}}\left(\mathbf{A}\mathbf{A}^{\mathbf{H}}\right)^{-1}\mathbf{A},$$

Where

    - **A** is a representation of said constraint matrix,
    - **I** is an identity matrix, and
    - $(\cdot)^{\mathbf{H}}$ denotes Hermitian transpose.

6. Method as claimed in claim 2, wherein said linear precoding (310) is designed such that a distance between said precoded symbols and said data symbols is minimized.

7. Method as claimed in claim 6, wherein said distance is a Euclidean distance.

8. Method as claimed in claim 2, wherein said linear precoding (310) represents a generation of a linear combination of base vectors, wherein the multiplication of the constraint matrix and each of the base vectors results in an all-zero vector, whereby each one of said base vectors is multiplied by a coefficient being one of said data symbols.

9. Method as claimed in claim 8, wherein said base vectors are orthogonal vectors.

10. Method as claimed in claim 9 wherein said orthogonal base vectors are obtained from a singular-value decomposition (SVD) of said constraint matrix.

11. Method as claimed in claim 1 wherein said constraints represent the property that said multicarrier signal's Fourier transform at one or more frequencies outside said designated bandwidth is zero.

12. Method as claimed in claim 1, wherein said multicarrier signal is used for transmission in a cognitive radio system.

13. Method as claimed in claim 1, wherein values for elements of said constraint matrix change over time.

14. Computer program, **characterized in** code means, which when run in a computer causes the computer to execute the method according to any of the claims 1-13.

15. Computer program product including a computer readable medium and a computer program according to claim 14, wherein said computer program is included in the computer readable medium.

16. Transmission entity arranged for transmitting a multicarrier signal representing data symbols, said multicarrier signal being a linear combination of subcarriers, said entity comprising modulation means arranged for modulating base signals with said data symbols, wherein each one of said base signals is a weighted sum of said subcarriers, said entity being **characterized in that** each one of said subcarriers is arranged to be weighted by an element of a weighting vector,
wherein the multiplication of a constraint matrix and the weighting vector results in an all-zero vector,
wherein said constraint matrix is arranged to represent constraints for limiting a magnitude of said multicarrier signal's Fourier transform at frequencies outside a designated bandwidth.

17. Transmission entity as claimed in claim 16, wherein said transmission entity comprises at least one of the means in the group of:

- means arranged for calculating said base signals; and
- means arranged for storing pre-calculated base signals.

**Patentansprüche**

1. Verfahren zum Erzeugen (100, 300) eines Mehrträgersignals, das Datensymbole repräsentiert, wobei das Mehrträgersignal eine Linearkombination von Hilfsträgern ist, wobei das Verfahren die Modulation der Basissignale mit den Datensymbolen umfasst, wobei jedes der Basissignale eine gewichtete Summe der Hilfsträger ist, wobei das Verfahren **dadurch gekennzeichnet ist, dass** jeder der Hilfsträger durch ein Element eines Gewichtsvektors gewichtet ist, wobei die Multiplikation einer Einschränkungsmatrix und des Gewichtsvektors zu einem Nullvektor führt, wobei die Einschränkungsmatrix die Einschränkungen repräsentiert, die die Größe der Fourier-Transformation des Mehrträgersignals bei Frequenzen außerhalb einer bestimmten Bandbreite begrenzen.

2. Verfahren nach Anspruch 1, wobei die Modulation der Basissignale durch die Modulation der Hilfsträger mit vorcodierten Symbolen ausgeführt wird, wobei die vorcodierten Symbole ein Ergebnis einer linearen Vorcodierung (310) der Datensymbole sind.

3. Verfahren nach Anspruch 2, wobei die lineare Vorcodierung (310) eine Projektion eines Datensymbolvektors, der die Datensymbole enthält, repräsentiert, wobei die Multiplikation der Einschränkungsmatrix und des Datensymbolvektors zu einem Nullvektor führt.

4. Verfahren nach Anspruch 3, wobei die Projektion eine orthogonale Projektion ist.

5. Verfahren nach Anspruch 2, wobei die lineare Vorcodierung (310) durch eine Vorcodierungsmatrix **G** in der Form:

$$\mathbf{G} = \mathbf{I} - \mathbf{A}^{\mathrm{H}}(\mathbf{A}\mathbf{A}^{\mathrm{H}})^{-1}\mathbf{A}$$

ausgedrückt wird, wobei

- **A** eine Darstellung der Einschränkungsmatrix ist,
- **I** eine Identitätsmatrix ist, und
- $(\cdot)^{\mathrm{H}}$ das hermitesche Transponieren bezeichnet.

6. Verfahren nach Anspruch 2, wobei die lineare Vorcodierung (310) so konstruiert ist, dass ein Abstand zwischen den vorcodierten Symbolen und den Datensymbolen minimiert ist.

7. Verfahren nach Anspruch 6, wobei der Abstand ein euklidischer Abstand ist.

8. Verfahren nach Anspruch 2, wobei die lineare Vorcodierung (310) eine Erzeugung einer Linearkombination von Basisvektoren repräsentiert, wobei die Multiplikation der Einschränkungsmatrix und jedes der Basisvektoren zu einem Nullvektor führt, wodurch jeder der Basisvektoren mit einem Koeffizienten multipliziert wird, der eines der Datensymbole ist.

9. Verfahren nach Anspruch 8, wobei die Basisvektoren orthogonale Vektoren sind.

10. Verfahren nach Anspruch 9, wobei die orthogonalen Basisvektoren aus einer Singulärwertzerlegung (SVD) der Einschränkungsmatrix erhalten werden.

11. Verfahren nach Anspruch 1, wobei die Einschränkungen die Eigenschaft repräsentieren, dass die Fourier-Transformation des Mehrträgersignals bei einer oder mehreren Frequenzen außerhalb der bestimmten Bandbreite null ist.

12. Verfahren nach Anspruch 1, wobei das Mehrträgersignal für die Übertragung in einem kognitiven Funksystem verwendet wird.

**13.** Verfahren nach Anspruch 1, wobei sich die Werte für die Elemente der Einschränkungsmatrix mit der Zeit ändern.

**14.** Computerprogramm, **gekennzeichnet durch** Codemittel, die, wenn sie in einem Computer ausgeführt werden, den Computer veranlassen, das Verfahren nach einem der Ansprüche 1-13 auszuführen.

**15.** Computerprogrammprodukt, das ein computerlesbares Medium und ein Computerprogramm nach Anspruch 14 enthält, wobei das Computerprogramm in dem computerlesbaren Medium enthalten ist.

**16.** Übertragungsentität, die dafür ausgelegt ist, ein Mehrträgersignal zu übertragen, das Datensymbole repräsentiert, wobei das Mehrträgersignal eine Linearkombination von Hilfsträgern ist, wobei die Entität Modulationsmittel umfasst, die dafür ausgelegt sind, die Basissignale mit den Datensymbolen zu modulieren, wobei jedes der Basissignale eine gewichtete Summe der Hilfsträger ist, wobei die Entität **dadurch gekennzeichnet ist, dass** jeder der Hilfsträger dafür ausgelegt ist, durch ein Element eines Gewichtsvektors gewichtet zu werden,
wobei die Multiplikation einer Einschränkungsmatrix und des Gewichtsvektors zu einem Nullvektor führt,
wobei die Einschränkungsmatrix dafür ausgelegt ist, die Einschränkungen zum Begrenzen einer Größe der Fourier-Transformation des Mehrträgersignals bei Frequenzen außerhalb einer bestimmten Bandbreite zu repräsentieren.

**17.** Übertragungsentität nach Anspruch 16, wobei die Übertragungsentität wenigstens eines der Mittel in der folgenden Gruppe umfasst:

- Mittel, die dafür ausgelegt sind, die Basissignale zu berechnen; und
- Mittel, die dafür ausgelegt sind, im Voraus berechnete Basissignale zu speichern.

**Revendications**

**1.** Procédé pour générer (100, 300) un signal multiporteuse représentant des symboles de données, ledit signal multiporteuse étant une combinaison linéaire de sous-porteuses, ledit procédé comprenant une modulation de signaux de base avec lesdits symboles de données, chacun desdits signaux de base étant une somme pondérée desdites sous-porteuses, ledit procédé étant **caractérisé en ce que** chacune desdites sous-porteuses est pondérée par un élément d'un vecteur de pondération,
la multiplication d'une matrice de contraintes et du vecteur de pondération produisant un vecteur tous zéros,
ladite matrice de contraintes représentant des contraintes limitant une amplitude de la transformée de Fourier dudit signal multiporteuse à des fréquences extérieures à une largeur de bande désignée.

**2.** Procédé selon la revendication 1, dans lequel ladite modulation de signaux de base s'effectue par modulation desdites sous-porteuses avec des symboles précodés, lesdits symboles précodés provenant d'un précodage linéaire (310) desdits symboles de données.

**3.** Procédé selon la revendication 2, dans lequel ledit précodage linéaire (310) représente une projection d'un vecteur symboles de données contenant lesdits symboles de données, la multiplication de la matrice de contraintes et du vecteur symboles de données produisant un vecteur tous zéros.

**4.** Procédé selon la revendication 3, dans lequel ladite projection est une projection orthogonale.

**5.** Procédé selon la revendication 2, dans lequel ledit précodage linéaire (310) s'exprime par une matrice de précodage **G** de la forme :

$$\mathbf{G} = \mathbf{I} - \mathbf{A}^{\mathrm{H}}(\mathbf{A}\mathbf{A}^{\mathrm{H}})^{-1}\mathbf{A} ,$$

où

- **A** est une représentation de ladite matrice de contraintes,
- **I** est une matrice identité, et
- **(·)^H** désigne la transposée hermitienne.

**6.** Procédé selon la revendication 2, dans lequel ledit précodage linéaire (310) est conçu de manière à minimiser une distance entre lesdits symboles précodés et lesdits symboles de données.

**7.** Procédé selon la revendication 6, dans lequel ladite distance est une distance euclidienne.

**8.** Procédé selon la revendication 2, dans lequel ledit précodage linéaire (310) représente une génération d'une combinaison linéaire de vecteurs de base, la multiplication de la matrice de contraintes et de chacun des vecteurs de base produisant un vecteur tous zéros, de sorte que chacun desdits vecteurs de base est multiplié par un coefficient correspondant à l'un desdits symboles de données.

**9.** Procédé selon la revendication 8, dans lequel lesdits vecteurs de base sont des vecteurs orthogonaux.

**10.** Procédé selon la revendication 9, dans lequel lesdits vecteurs de base orthogonaux sont obtenus à partir d'une décomposition en valeurs singulières (SVD) de ladite matrice de contraintes.

**11.** Procédé selon la revendication 1, dans lequel lesdites contraintes représentent la propriété selon laquelle la transformée de Fourier dudit signal multiporteuse à au moins une fréquence extérieure à ladite largeur de bande désignée est nulle.

**12.** Procédé selon la revendication 1, dans lequel ledit signal multiporteuse est destiné à la transmission dans un système radio cognitif.

**13.** Procédé selon la revendication 1, dans lequel des valeurs d'éléments de ladite matrice de contraintes varient dans le temps.

**14.** Programme d'ordinateur, **caractérisé par** un moyen formant code qui, une fois exécuté sur un ordinateur, amène l'ordinateur à mettre en oeuvre le procédé selon l'une quelconque des revendications 1 à 13.

**15.** Produit-programme d'ordinateur, comportant un support exploitable par ordinateur et un programme d'ordinateur selon la revendication 14, lequel programme d'ordinateur est incorporé dans le support exploitable par ordinateur.

**16.** Entité de transmission, conçue pour transmettre un signal multiporteuse représentant des symboles de données, ledit signal multiporteuse étant une combinaison linéaire de sous-porteuses, ladite entité comprenant un moyen de modulation conçu pour moduler des signaux de base avec lesdits symboles de données, chacun desdits signaux de base étant une somme pondérée desdites sous-porteuses, ladite entité étant **caractérisée en ce que** chacune desdites sous-porteuses est conçue pour être pondérée par un élément d'un vecteur de pondération, la multiplication d'une matrice de contraintes et du vecteur de pondération produisant un vecteur tous zéros, ladite matrice de contraintes étant conçue pour représenter des contraintes limitant une amplitude de la transformée de Fourier dudit signal multiporteuse à des fréquences extérieures à une largeur de bande désignée.

**17.** Entité de transmission selon la revendication 16, comprenant au moins un des moyens dans le groupe constitué par :

- un moyen conçu pour calculer lesdits signaux de base ; et
- un moyen conçu pour mémoriser des signaux de base préalablement calculés.

<u>100</u>

**d** → | 110 | → s(t)

**Fig. 1**

```
┌─────────────────────────┐
│         Start           │
└─────────────────────────┘
            │
            ▼
┌─────────────────────────┐
│   Determination of a    │
│   precoded vector  d̄,   │
└─────────────────────────┘
            │
            ▼
┌─────────────────────────┐
│    Modulation of        │
│  subcarriers with the   │
│   precoded vector  d̄,   │
└─────────────────────────┘
```

**Fig. 2**

300

**d** → | 310 | → **d̄** → | 320 | → s(t)

Fig. 3

$(\mathbf{I} - \mathbf{G})\mathbf{d}$

d

$\overline{\mathbf{d}} = \mathbf{Gd}$

Nullspace
of A

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IVAN COSOVIC et al.** *IEEE communication letters,* 01 June 2006, vol. 10 (6), 444-446

- **JAAP VAN DE BEEK et al.** *IEEE communication letters,* 01 January 2009, vol. 13 (1), 1-3